# EUROPÄISCHE PATENTANMELDUNG

(11) **EP 3 168 034 A1**
(43) Veröffentlichungstag der Anmeldung: **17.05.2017**
(21) Anmeldenummer: 15194271.1
(22) Anmeldetag: 12.11.2015
(51) Int. Cl.: B29C 67/00, B29C 70/16, B33Y 30/00, B29C 35/16, B29C 35/08

(54) **VORRICHTUNG ZUR ADDITIVEN FERTIGUNG EINES BAUTEILS**

(71) Anmelder: Fraunhofer Gesellschaft zur Förderung der angewandten Forschung e.V., 80686 München (DE)
(72) Erfinder: Michel, Peter, 95028 Hof (DE); Gläßler, Thomas, 06386 Hinsdorf (DE)
(74) Vertreter: Friese Goeden Patentanwälte PartGmbB

(57) **Zusammenfassung**

Die Erfindung betrifft eine Vorrichtung (1) zur additiven Fertigung eines Bauteils (2), mit zumindest einer Bauteilaufnahme (3), welche dazu eingerichtet ist, das zu fertigende Bauteil (2) aufzunehmen, und mit zumindest einer Auftragvorrichtung (4), welche dazu eingerichtet ist, ein thermoplastisches Material (29) zu erwärmen und in einer vorgebbaren Menge abzulegen, wobei die Vorrichtung (1) weiterhin zumindest eine Strahlungsquelle (6) enthält, welche dazu eingerichtet ist, elektromagnetische Strahlung zu erzeugen, mit welcher zumindest eine Teilfläche (66) des Bauteils erwärmbar ist. Weiterhin betrifft die Erfindung ein Verfahren zur additiven Herstellung eines Bauteils (2).

## Beschreibung

Die Erfindung betrifft eine Vorrichtung zur additiven Fertigung eines Bauteils mit zumindest einer Bauteilaufnahme, welche dazu eingerichtet ist, das zu fertigende Bauteil aufzunehmen und mit zumindest einer Auftragvorrichtung, welche dazu eingerichtet ist, ein thermoplastisches Material zu erwärmen und in einer vorgebbaren Menge abzulegen. Weiterhin betrifft die Erfindung ein Verfahren zur additiven Fertigung eines Bauteils, bei welchem zumindest ein erwärmtes Thermoplast in vorgebbaren Flächenbereichen des Bauteils abgelegt und durch Abkühlen verfestigt wird. Verfahren der eingangs genannten Art sind insbesondere im Bereich des Rapid Prototyping gebräuchlich.

Aus der Praxis ist ein generatives bzw. additives Fertigungsverfahren bekannt, bei welchem ein Werkstück schichtweise aus einem schmelzfähigen Kunststoff aufgebaut wird. Dabei wird ein Raster von Punkten oder Strängen auf eine Fläche aufgetragen, wobei jeder Strang bzw. Punkt durch die Verflüssigung eines strangförmigen Kunststoffmaterials aus einem Thermoplast erzeugt wird. Das verflüssigte Thermoplast wird durch Extrudieren mittels einer Düse an einer vorgebbaren Stelle des Werkstückes abgelegt und anschließend durch Abkühlen an der gewünschten Position verfestigt. Der Aufbau eines komplexen Körpers erfolgt, indem zeilenweise eine Arbeitsebene abgefahren wird und darauf eine weitere Arbeitsebene abgeschieden wird. Somit entsteht die gewünschte Form schichtweise. Mit diesen Verfahren können Hohlkörper und Vollkörper gefertigt werden. Diese bekannten Herstellungsverfahren sind unter der Bezeichnung Fused Deposition Modeling, Schmelzschichtung oder Fused Filament Fabrication bekannt.

Diese bekannten Herstellungsverfahren weisen den Nachteil auf, dass der strangweise Aufbau ein sehr inhomogenes thermisches Belastungsprofil bedingt. Dieses entsteht, da der aufgeschmolzene Kunststoff der jeweils gefertigten Arbeitsebene jeweils auf bereits erkaltetes Material der vorhergehenden Arbeitsebene abgelegt wird. Hierdurch entsteht eine unzureichende Homogenität des Bauteils an den Grenzflächen zwischen einzelnen Arbeitsebenen. Dadurch entstehen Materialfehler, welche insbesondere bei hohen dynamischen Belastungen frühzeitig zum Versagen des Bauteils führen können.

Weiterhin benötigen viele Kunststoffbauteile eine Faserverstärkung, um die Ihnen zugedachten Belastungen über die Lebensdauer aufnehmen zu können. Hohe Faservolumenanteile können jedoch mit bekannten Verfahren nicht erzielt werden.

Schließlich weisen Kunststoffbauteile, welche mit dem bekannten Verfahren hergestellt wurden, eine schlechte Oberflächenqualität mit großer Rauheit auf, da durch das punkt- bzw. strangweise Ablegen des thermoplastischen Materials eine gerippte bzw. gewellte Oberflächenstruktur sichtbar bleibt.

All diese Nachteile beschränken das bekannte additive Herstellungsverfahren auf Anwendungen, in welchen die gefertigten Kunststoffbauteile nur eine geringe mechanische Last aushalten müssen. Dies können beispielsweise einfache Alltagsgegenstände sein, wie Spielzeugfiguren oder Deko^-artikel. Eine weitere mögliche Anwendung besteht im Herstellen von Prototypen bzw. Musterbauteilen, um im Entwicklungsprozess eines Produktes frühzeitig einen optischen Eindruck des Bauteils zu erhalten und/oder die konstruktive Anpassung an benachbarte Bauteile zu ermöglichen.

Wirtschaftlich sinnvoll wäre der Einsatz generativer bzw. adaptiver Herstellungsverfahren jedoch auch in der Kleinserienfertigung, bei welcher nur geringe Stückzahlen bestimmter Bauteile benötigt werden. Dies scheitert derzeit jedoch oftmals an der geringen mechanischen Belastbarkeit der mit dem bekannten Verfahren hergestellten Bauteile.

Ausgehend vom Stand der Technik liegt der Erfindung somit die Aufgabe zugrunde, ein Herstellungsverfahren anzugeben, mit welchem Kunststoffbauteile mit großer mechanischer Belastbarkeit und/oder hoher Oberflächenqualität bereitgestellt werden können.

Die Aufgabe wird erfindungsgemäß durch eine Vorrichtung gemäß Anspruch 1 und ein Verfahren gemäß Anspruch 5 gelöst. Vorteilhafte Weiterbildungen der Erfindung finden sich in den Unteransprüchen.

Erfindungsgemäß werden ein Verfahren und eine Vorrichtung zur additiven Fertigung eines Bauteils vorgeschlagen. Unter einer additiven bzw. generativen Fertigung im Sinne der vorliegenden Erfindung wird ein Verfahren verstanden, bei welchem dem Bauteil im Verlauf des Fertigungsverfahrens Material zugefügt wird. Damit unterscheidet sich das adaptive Fertigungsverfahren beispielsweise von spanender Bearbeitung, bei welcher mit einer großen Materialmenge begonnen wird, welche im Laufe des Bearbeitungsverfahrens abgetragen wird.

Das auf diese Weise hergestellte Bauteil kann beispielsweise ein Artikel sein, welcher nur in geringen Stückzahlen bzw. als Kleinserie benötigt wird, um auf diese Weise die Erstellung eines aufwändigen Spritzgusswerkzeuges zu vermeiden. In anderen Ausführungsformen der Erfindung kann das Bauteil ein Prototyp bzw. ein Anschauungsmodell sein, um im Entwicklungsprozess rasch einen Eindruck des Bauteils zu erhalten.

Die erfindungsgemäße Vorrichtung weist zumindest eine Bauteilaufnahme auf, welche dazu eingerichtet ist, das zu fertigende Bauteil während des Herstellungsprozesses aufzunehmen. Die Bauteilaufnahme kann beispielsweise ein Maschinentisch, ein Spannfutter oder eine andere, an sich bekannte Vorrichtung sein oder eine solche enthalten.

Weiterhin weist die erfindungsgemäße Vorrichtung eine Auftragvorrichtung auf, welche dazu eingerichtet ist, ein thermoplastisches Material zu erwärmen und in einer vorgebbaren Menge an vorgebbaren Orten abzulegen. Zu diesem Zweck ist die Auftragvorrichtung relativ zur Bauteilaufnahme beweglich. Somit kann die Bauteilaufnahme ortsfest sein und die Auftragvorrichtung kann in zumindest drei Raumrichtungen verschiebbar sein und optional in zumindest einer Richtung drehbar gelagert sein. In anderen Ausführungsformen der Erfindung kann eine ortsfeste Auftragvorrichtung mit einer in zumindest drei lateralen Raumrichtungen bewegbaren Bauteilaufnahme kombiniert sein. In wiederum einer anderen Ausführungsform kann die Auftragvorrichtung in ein oder zwei Raumrichtungen bewegbar sein und die Bauteilaufnahme kann in den hierzu komplementären ein oder zwei Raumrichtungen bewegbar sein. Wesentlich ist eine relative Bewegung zwischen der Auftragvorrichtung und der Bauteilaufnahme. Die Erfindung lehrt nicht die Verwendung einer speziellen Maschinenkinematik als Lösungsprinzip.

Die Bewegbarkeit der Bauteilaufnahme und/oder Auftragvorrichtung kann beispielsweise durch Spindelantriebe, pneumatische Antriebe, Piezoantriebe, Industrieroboter oder andere, an sich bekannte Vorrichtungen der Automatisierungstechnik realisiert werden.

Die Auftragvorrichtung ist dazu eingerichtet, ein thermoplastisches Material zu erwärmen und in einer vorgebbaren Menge bzw. Ausstoßrate an vorgebbaren Stellen des Bauteils abzulegen. Hierzu kann das thermoplastische Material der Auftragvorrichtung beispielsweise als Strang, als Pulver oder als Granulat zugeführt werden. In einigen Ausführungsformen der Erfindung kann das thermoplastische Material verflüssigt in einem Vorratsbehälter vorliegen und als flüssige bzw. pastöse Masse zur Auftragvorrichtung gefördert werden.

Die Auftragvorrichtung umfasst zumindest eine Extruderdüse, aus welcher das erwärmte thermoplastische Material abgegeben wird. Schließlich umfasst die Auftragvorrichtung eine Kontrolleinrichtung, welche die Menge des abgegebenen thermoplastischen Materials kontrolliert, sodass größere oder kleinere Mengen pro Zeiteinheit abgegeben werden können oder eine vollständige Unterbrechung des Materialflusses möglich ist. Bei Betrieb der Vorrichtung wird das Bauteil in an sich bekannter Weise schichtweise in einer Mehrzahl von Arbeitsebenen aufgebaut. Hierzu werden mittels eines Computers Fertigungsdaten erzeugt, welche das Aussehen der einzelnen Materiallagen in der jeweiligen Arbeitsebene enthalten und fortlaufend an die erfindungsgemäße Vorrichtung ausgegeben werden, um das Bauteil Schicht für Schicht abzuscheiden.

Erfindungsgemäß wird nun vorgeschlagen, dass die Vorrichtung in einer Ausführungsform zumindest eine Strahlungsquelle enthält, welche dazu eingerichtet ist, elektromagnetische Strahlung zu erzeugen, mit welcher zumindest eine Teilfläche des Bauteils erwärmbar ist. Dieses Merkmal hat die Wirkung, dass das bereits abgeschiedene und erkaltete Material einer vorhergehenden Arbeitsebene nochmals erwärmt werden kann. Hierdurch kann die Verbindung des abgeschiedenen thermoplastischen Materials der aktuell gefertigten Arbeitsebene zum Material der vorhergehenden Arbeitsebene des Bauteils verbessert werden, wenn das thermoplastische Material aus der Auftragvorrichtung auf ein erwärmtes bzw. aufgeschmolzenes Material des Bauteils trifft. Auf diese Weise kann die Homogenität des schmelzgeschichteten Materials erhöht werden.

In einigen Ausführungsformen der Erfindung kann durch die elektromagnetische Strahlung der Temperaturgradient im Fügebereich kleiner als etwa 5 K, kleiner als etwa 3 K oder kleiner als etwa 1 K sein. Der geringe Temperaturgradient im Fügebereich zwischen dem Material aus der Auftragvorrichtung und dem in vorgehenden Arbeitsschritten abgeschiedenen Material des Bauteils bewirkt Ausgleichsvorgänge wie beispielsweise Eigendiffusion, durch welche die Fügenaht zumindest teilweise verschwindet und die Materialhomogenität des Bauteils zunimmt. Hierdurch kann die Schlagzähigkeit und Duktilität des Bauteils erhöht sein, sodass die erfindungsgemäß hergestellten Bauteile auch dann Verwendung finden können, wenn an sich bekannte Bauteile mechanisch versagen würden.

In einigen Ausführungsformen der Erfindung kann die erfindungsgemäße Vorrichtung zumindest eine Zufuhreinrichtung aufweisen, welche dazu eingerichtet ist, eine Faserverstärkung, welche eine trockene Endlosfaser enthält oder daraus besteht, in das Bauteil einzubringen. Auf diese Weise können mit der erfindungsgemäßen Vorrichtung erstmals auch faserverstärkte Kunststoffe mit großem Faservolumenanteil von mehr als 35% oder mehr als 50% in einem generativen Herstellungsverfahren erzeugt werden. Da die Fasern anders als bei bekannten Vorrichtungen nicht durch die Düse der Auftragsvorrichtung passieren müssen, sondern durch eine separate Zufuhreinrichtung in das Bauteil eingebracht werden, können höhere Faservolumenanteile realisierbar sein. Dies erhöht in einigen Ausführungsformen die mechanische Belastbarkeit des Bauteiles, insbesondere gegenüber Zugspannungen, sodass sich die Einsatzmöglichkeiten additiv gefertigter Bauteile erweitern.

In einigen Ausführungsformen der Erfindung kann die Faserverstärkung in Form von Streifen abwechselnd schichtweise mit einem nicht-faserverstärkten thermoplastischen Kunststoff aus der Auftragvorrichtung verarbeitet werden. Somit wird zunächst die Faserverstärkung, welche eine trockene Endlosfaser enthält oder daraus besteht, in der nächsten folgenden Arbeitsebene abgelegt und nachfolgend in thermoplastisches Material aus der Auftragvorrichtung eingebettet.

In einigen Ausführungsformen der Erfindung kann die Vorrichtung ein Werkzeugwechselsystem aufweisen, welches sowohl die Auftragvorrichtung als auch die Zufuhreinrichtung aufnehmen kann. Auf diese Weise kann abwechselnd Verstärkungsfaser und thermoplastisches Material verarbeitet werden, um ein faserverstärktes Bauteil schichtweise zu erzeugen.

In einigen Ausführungsformen der Erfindung kann die erfindungsgemäß vorgeschlagene Vorrichtung sowohl eine Strahlungsquelle aufweisen, welche dazu eingerichtet ist, elektromagnetische Strahlung zu erzeugen, mit welcher zumindest eine Teilfläche des Bauteils erwärmbar ist, als auch eine Zufuhreinrichtung, welche eine Faserverstärkung in das Bauteil einbringen kann, welche eine trockene Endlosfaser enthält oder daraus besteht. Die Kombination beider Merkmale erlaubt es, das Bauteil zu erwärmen bzw. aufzuschmelzen, ehe die Faserverstärkung abgelegt wird, sodass die Faserverstärkung bereits teilweise in das Bauteil eingebettet ist und hierdurch mechanisch fixiert wird und ein homogener Übergang zwischen Faserverstärkung und thermoplastischem Material erzielt wird. Alternativ oder zusätzlich kann auch die Faserverstärkung selbst bzw. das darunterliegende Material des Bauteils erwärmt werden, ehe die Faserverstärkung in erwärmtes thermoplastisches Material aus der Auftragvorrichtung eingebettet wird. Durch geringe Temperaturgradienten zwischen Faserverstärkung, Bauteil und thermoplastischem Material aus der Auftragvorrichtung können wiederum die bereits vorstehend beschriebenen Ausgleichsvorgänge ablaufen, welche die Fügenaht zumindest teilweise verschwinden lassen und eine homogene Verbindung der thermoplastischen Materialien und einen möglichst vollflächigen Einbau der Faserverstärkung ermöglichen.

In einigen Ausführungsformen der Erfindung kann die Strahlungsquelle zumindest einen Laser enthalten oder daraus bestehen. Der Laser kann dazu eingerichtet sein, infrarote Strahlung abzugeben. In einigen Ausführungsformen der Erfindung kann der Laser eine Emissionswellenlänge zwischen etwa 15 µm und etwa 1 µm oder zwischen etwa 12 µm und etwa 8 µm aufweisen. In einigen Ausführungsformen der Erfindung kann der Laser ein CO₂-Laser sein, welcher elektromagnetische Strahlung mit einer Wellenlänge von 10,6 µm emittiert.

Die Wellenlänge des Lasers ist auf das Kunststoffmaterial des Bauteils insoweit abgestimmt, als die elektromagnetische Strahlung des Lasers im Kunststoff absorbiert werden kann, um diesen zu erwärmen. Hierzu kann der Kunststoff in einigen Ausführungsformen der Erfindung einen Farbstoff enthalten, welcher zumindest eine Absorptionsbande im Bereich der verwendeten Laserstrahlung aufweist. Der Farbstoff kann im Sichtbaren Spektralbereich transparent sein, um das optische Erscheinungsbild des Bauteils nicht zu beeinträchtigen. Durch die Laserstrahlung erfolgt das oberflächige Erwärmen des bereits verarbeiteten Kunststoffmaterials des Bauteils. Die Erwärmung kann in einigen Ausführungsformen der Erfindung etwa 15 K bis etwa 50 K oder etwa 20 K bis etwa 40 K über die Schmelztemperatur des verwendeten thermoplastischen Materials erfolgen. In einigen Ausführungsformen der Erfindung wird das Bauteil so erwärmt, dass der Temperaturgradient zwischen dem aus der Auftragvorrichtung austretenden Material und dem erwärmten Material des Bauteils zum Zeitpunkt des Ablegens des Materials minimal ist.

In einigen Ausführungsformen der Erfindung kann die Strahlungsquelle zusätzlich zumindest einen bewegbaren Spiegel enthalten, mit welchem die Strahlung auf die zu erwärmende Teilfläche des Bauteils lenkbar ist. Bewegliche Spiegel weisen dabei eine geringere Massenträgheit auf als die verwendete Laserlichtquelle, sodass durch Bewegung der Spiegel der Strahl rasch an den gewünschten Ort des Bauteils gelenkt werden kann, beispielsweise vorlaufend zur Bewegung der Düse der Auftragvorrichtung.

In einigen Ausführungsformen der Erfindung kann die Erwärmung über die Schmelztemperatur ausgehend von der Oberfläche bis zu einer Tiefe von etwa 0,01 mm bis etwa 0,2 mm erfolgen. In anderen Ausführungsformen der Erfindung kann die Erwärmung über die Schmelztemperatur ausgehend von der Oberfläche bis zu einer Tiefe von etwa 0,05 mm bis etwa 0,15 mm erfolgen. Hierdurch wird ein kontinuierlicher Temperaturverlauf von der Oberfläche zum bereits abgeschiedenen Material des Bauteils ermöglicht, sodass Inhomogenitäten des Bauteils reduziert und die Schlagzähigkeit erhöht werden.

In einigen Ausführungsformen der Erfindung kann die Vorrichtung zusätzlich ein Andrucksystem aufweisen. Das Andrucksystem kann in einigen Ausführungsformen der Erfindung zumindest eine Rolle, eine Kugel, einen Stift oder weitere, hier nicht explizit genannte Bauteile aufweisen. Hierdurch kann die Faserverstärkung in das bereits abgeschiedene thermoplastische Material eingebettet werden, um den Faservolumenanteil des fertigen Bauteils zu erhöhen.

In einigen Ausführungsformen der Erfindung kann die Faserverstärkung ein vorimprägniertes textiles Halbzeug enthalten. In einigen Ausführungsformen der Erfindung kann ein solches textiles Halbzeug einen Faservolumenanteil von mehr als 40 % oder mehr als 60 % oder mehr als 80 % enthalten.

Die Imprägnierung des vorimprägnierten textilen Halbzeuges kann in einigen Ausführungsformen der Erfindung thermoplastische Polymeren enthalten oder daraus bestehen, wobei die Verstärkungsfasern voll oder teilimprägniert eingebettet sind. Die thermoplastischen Polymere können durch Einbringen von Wärme, z.B. durch elektromagnetische Strahlung, aufgeschmolzen werden, sodass die Faserverstärkung flexibel in das Bauteil eingebracht werden kann. Durch Abkühlen der Faserverstärkung und des darunter befindlichen thermoplastischen Materials erfolgt das Verfestigen beider Schichten und somit der Verbindungsvorgang. Dieser kann auch unter Druck erfolgen, welcher beispielsweise durch ein Andrucksystem aufgebracht werden kann. Nach der Fertigstellung eines Bauteiles und vollständiger Erstarrung des thermoplastischen Polymers erreicht die Faserverstärkung ihre Endfestigkeit, sodass das Bauteil selbst eine gegenüber bekannten generativ erzeugten Bauteilen erhöhte Festigkeit aufweisen kann.

In einigen Ausführungsformen der Erfindung betrifft diese ein Verfahren zur additiven Fertigung eines Bauteils, bei welchem zumindest eine Oberfläche des Bauteils durch Einwirkung elektromagnetischer Strahlung über die Schmelztemperatur erwärmt wird. Die Erwärmung kann in einigen Ausführungsformen der Erfindung etwa 15 K bis etwa 30 K über die Schmelztemperatur erfolgen. Hierdurch kann die Oberfläche des fertigen Bauteils geglättet und das Bauteil damit veredelt werden. In einigen Ausführungsformen der Erfindung kann die Aufschmelztiefe so gewählt sein, dass diese in etwa gleich der maximalen Rautiefe ist. In einigen Ausführungsformen der Erfindung kann die Aufschmelztiefe geringer sein als die maximale Rautiefe. Hierdurch wird ein Umschmelzvorgang ausgelöst, welcher durch Oberflächenspannungen das Verlaufen der Rauheiten bewirkt. Somit können auch Bauteile, welche durch einzelne Stränge bzw. Punkte vom thermoplastischen Material erzeugt wurden und hierdurch eine schlechte Oberflächenqualität aufweisen, mit Rautiefen von etwa 0,4 µm bis etwa 3 µm hergestellt werden. Dadurch erweitern sich die Einsatzmöglichkeiten des generativen Herstellungsverfahrens, da sowohl technisch anspruchsvolle Oberflächen, wie beispielsweise Gleitlager, erzeugt werden können als auch dekorative Oberflächen bereitgestellt werden können.

Nachfolgend soll die Erfindung anhand von Figuren ohne Beschränkung des allgemeinen Erfindungsgedankens näher erläutert werden. Dabei zeigt:
Figur 1 eine Vorrichtung gemäß der vorliegenden Erfindung bei der Ablage thermoplastischen Materials.
Figur 2 zeigt die Vorrichtung gemäß Figur 1 bei der Ablage einer Faserverstärkung.
Figur 3 erläutert die Oberflächenglättung eines faserverstärkten Bauteils.
Figur 4 zeigt die Oberflächenglättung eines Bauteils ohne Faserverstärkung.
Figur 5 zeigt ein erstes Ausführungsbeispiel eines erfindungsgemäß hergestellten Bauteils.
Figur 6 zeigt ein zweites Ausführungsbeispiel eines erfindungsgemäß hergestellten Bauteils.

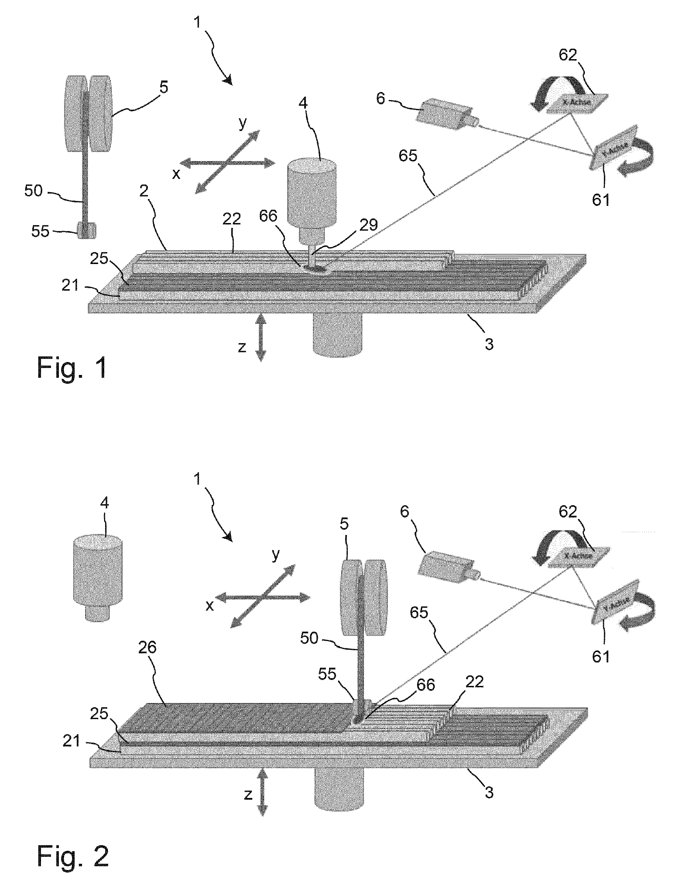

Figur 1 zeigt eine Ausführungsform einer erfindungsgemäßen Vorrichtung zur additiven Fertigung eines Bauteils 2. Das Bauteil 2 ist in einer Bauteilaufnahme 3 aufgenommen, welche im dargestellten Ausführungsbeispiel auf- und abbewegt werden kann. Die Bauteilaufnahme 3 enthält einen Auflagetisch, auf welchem das Bauteil 2 befestigt ist, beispielsweise durch eine Klebeverbindung oder eine Spannverbindung.

Das beispielhaft dargestellte Bauteil 2 enthält eine erste Schicht 21 aus thermoplastischem Material, eine Schicht 25 aus Verstärkungsfasern und eine zweite Schicht 22 aus thermoplastischem Material, welche auf der Schicht aus Verstärkungsfasern abgeschieden wird. Figur 1 zeigt die Vorrichtung bei der Abscheidung der zweiten Schicht 22 aus thermoplastischem Material.

Zum lagenweisen Erzeugen des Bauteils 2 kann die Bauteilaufnahme 3 nach Herstellen einer ersten Schicht in Richtung z um einen vorgebbaren Betrag abgesenkt werden, um die zweite Schicht auf der ersten Schicht abzuscheiden. Nach Abscheiden der zweiten Schicht kann die Bauteilaufnahme wiederum um einen vorgebbaren Betrag abgesenkt werden, um die dritte Schicht zu erzeugen. Dies wird solange fortgesetzt, bis das Bauteil 2 vollständig erzeugt wurde.

Um vorgebbare Flächenbereiche innerhalb einer Arbeitsebene mit thermoplastischem Material und/oder Verstärkungsfasern zu versehen, ist die Auftragvorrichtung 4 in der Arbeitsebene der Bauteilaufnahme 3 bewegbar. In den Figuren ist diese Ebene mit den Raumrichtungen x und y bezeichnet.

Der Auftragvorrichtung 4 wird thermoplastisches Material bzw. Halbzeug als Draht, Strang, Pulver oder in vorerwärmter, pastöser Form zugeführt. Das thermoplastische Material wird in der Auftragvorrichtung 4 aufgeschmolzen und mit einer vorgebbaren Abgaberate als Strahl 29 abgegeben. Der Strahl kann verstärkt oder abgeschwächt werden oder vollständig unterbrochen werden, um einzelne Stränge oder Punkte thermoplastischen Materials auf dem Bauteil 2 abzuscheiden.

Weiterhin weist die Vorrichtung 1 eine Strahlungsquelle 6 auf. Im dargestellten Ausführungsbeispiel ist die Strahlungsquelle 6 als Laser ausgebildet, welcher kohärente, hochenergetische Strahlung abgibt. Diese kann in einigen Ausführungsformen der Erfindung den infraroten Spektralbereich umfassen. Beispielsweise kann die Laserstrahlung eine Wellenlänge von 10,6 µm aufweisen.

Die Strahlung 65 des Lasers wird über zwei bewegliche Spiegel 61 und 62 abgelenkt, sodass der Strahlfleck 6 auf der Oberfläche des Bauteils 2 verschwenkt werden kann.

Zur Herstellung eines faserverstärkten Bauteils 2 mit gegenüber dem Stand der Technik verbesserten Eigenschaften wird der Strahlfleck 66 entweder vorlaufend zum Strahl 29 des thermoplastischen Materials über die Oberfläche des Bauteils 2 geführt oder der Strahlfleck 66 trifft im Bereich des Auftreffpunktes des Strahls 29 des thermoplastischen Materials auf. Hierdurch wird die bereits abgeschiedene erste Schicht 21 thermoplastischen Materials und/oder die Faserverstärkung 25 erwärmt. Dies führt dazu, dass sich das erwärmte thermoplastische Material nahezu nahtfrei mit dem thermoplastischen Material 29 aus der Auftragvorrichtung 4 verbindet. Somit kann die Faserverstärkung 25 in das thermoplastische Material des Bauteils 2 eingebettet werden und/oder das Bauteil 2 weist auch ohne Faserverstärkung aufgrund der besseren Verbindung des abgeschiedenen mit dem bereits vorhandenen Material eine erhöhte Schlagzähigkeit und/oder Duktilität auf.

Figur 1 zeigt weiterhin eine Zufuhreinrichtung 5, welche eine Faserverstärkung 50 bereitstellt. Die Zufuhreinrichtung 5 kann beispielsweise mit einem Schnellwechselsystem an die nicht dargestellte Positioniereinrichtung der Vorrichtung 1 angekoppelt werden, wenn die Auftragvorrichtung 4 nicht benötigt wird und andernfalls in einem Werkzeugmagazin zwischengelagert werden.

Figur 2 zeigt die Vorrichtung 1 gemäß Figur 1 bei der Erzeugung einer Faserverstärkung im Bauteil 2. Gleiche Bezugszeichen bezeichnen gleiche Bestandteile der Erfindung, sodass sich die nachfolgende Beschreibung auf die wesentlichen Unterschiede beschränkt.

Gemäß Figur 2 wurde die zweite Schicht thermoplastischen Materials 22 vollständig erzeugt. Darauf wird nun eine zweite Faserverstärkung 26 erzeugt.

Hierzu wird die Auftragvorrichtung 4 einem Werkzeugmagazin zugeführt und die Zufuhreinrichtung 5 mit der Positioniereinrichtung verbunden. Sodann wird Verstärkungsfaser 50, welche eine trockene Endlosfaser enthält oder daraus besteht, von einer Vorratsspule der Zufuhreinrichtung 5 abgewickelt und mittels einer Andruckrolle 55 auf der Oberfläche der zweiten thermoplastischen Schicht 22 abgelegt.

Der Andruckrolle 55 voreilend bewegt sich der Strahlfleck 66 der Strahlungsquelle 6. Diese bewirkt ein zumindest oberflächliches Anschmelzen der zweiten thermoplastischen Schicht 22, sodass die Verstärkungsfaser 50 durch die Andruckrolle 55 zumindest teilweise in das thermoplastische Material eingearbeitet werden kann.

Die Verstärkungsfaser 50 kann ein vorimprägniertes textiles Halbzeug enthalten. In einigen Ausführungsformen der Erfindung kann ein solches textiles Halbzeug einen Faservolumenanteil von mehr als 40 % oder mehr als 60 % oder mehr als 80 % enthalten.

Die Imprägnierung des vorimprägnierten textilen Halbzeuges kann in einigen Ausführungsformen der Erfindung thermoplastische Polymere enthalten oder daraus bestehen, wobei die Verstärkungsfasern 50 voll oder teilimprägniert eingebettet sind. Durch den voreilenden Strahlfleck 66 der Strahlungsquelle 6 kann Wärme eingebracht werden, durch welche die thermoplastischen Polymere der Imprägnierung der Verstärkungsfasern aufgeschmolzen werden, sodass die Faserverstärkung flexibel in das Bauteil eingebracht werden kann. Durch Abkühlen der Faserverstärkung und des darunter befindlichen thermoplastischen Materials erfolgt das Verfestigen beider Schichten und somit der Verbindungsvorgang. Dieser kann auch unter Druck der Andruckrolle 55 erfolgen.

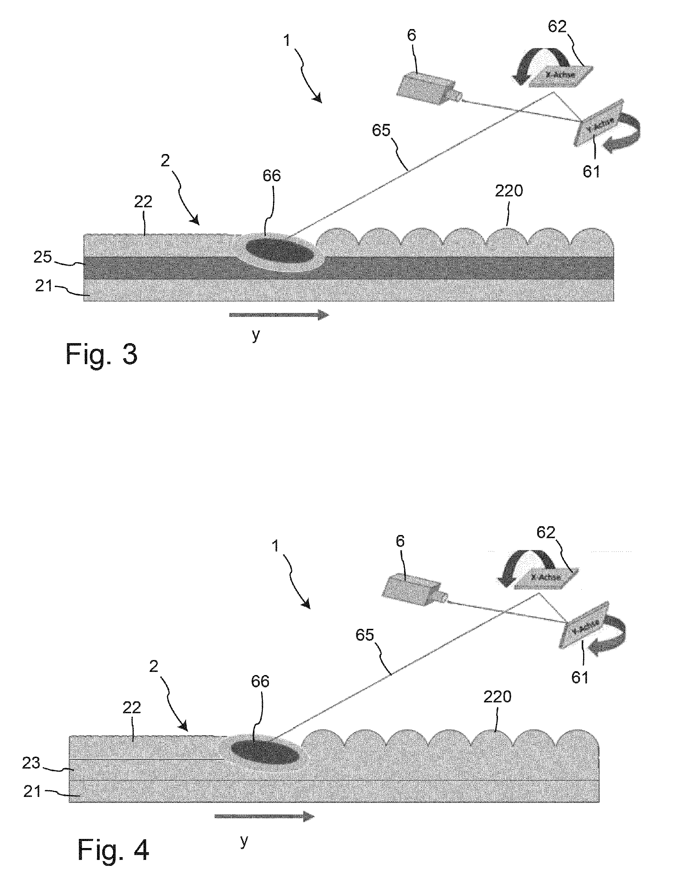

Anhand der Figuren 3 und 4 wird das Glätten der Oberfläche 220 eines Bauteils 2 erläutert.

Wie in den Figuren 1 und 2 ersichtlich ist, wird das thermoplastische Material in Strängen auf der Oberfläche des Bauteiles 2 abgelegt. Hierdurch entsteht eine rippen- bzw. wellenförmige Oberfläche, deren Rautiefe durch den Durchmesser der abgelegten Stränge aus thermoplastischem Material gegeben ist. Hierdurch können die Bauteile 2 eine Rautiefe von mehr als 100 µm, mehr als 150 µm oder gar mehr als 200 µm aufweisen. Diese Oberflächenqualität ist für viele Anwendungen unzureichend.

Erfindungsgemäß wird nun vorgeschlagen, den Strahlfleck 66 so auf die Oberfläche zu lenken, dass diese aufschmilzt. In einigen Ausführungsformen der Erfindung kann die Oberfläche 220 um etwa 20 K über die Schmelztemperatur erwärmt werden.

Die temporäre, örtliche Verflüssigung der Oberfläche 220 führt zum Ausfließen der Rauheit aufgrund der lokalen Viskositätsabnahme und der Oberflächenspannung des thermoplastischen Materials. Hierdurch wird die Oberfläche ähnlich dem Laserpolieren von Gläsern oder Metallen geglättet. In einigen Ausführungsformen der Erfindung kann die Oberflächenrauheit bzw. die Rautiefe nach dem Glätten zwischen etwa 0,4 µm und etwa 3 µm betragen. Dies erweitert den Anwendungsbereich des generativen Herstellungsverfahrens für Bauteile, welche hohe dekorative Anforderungen erfüllen müssen und/oder präzise Passungen aufweisen sollen.

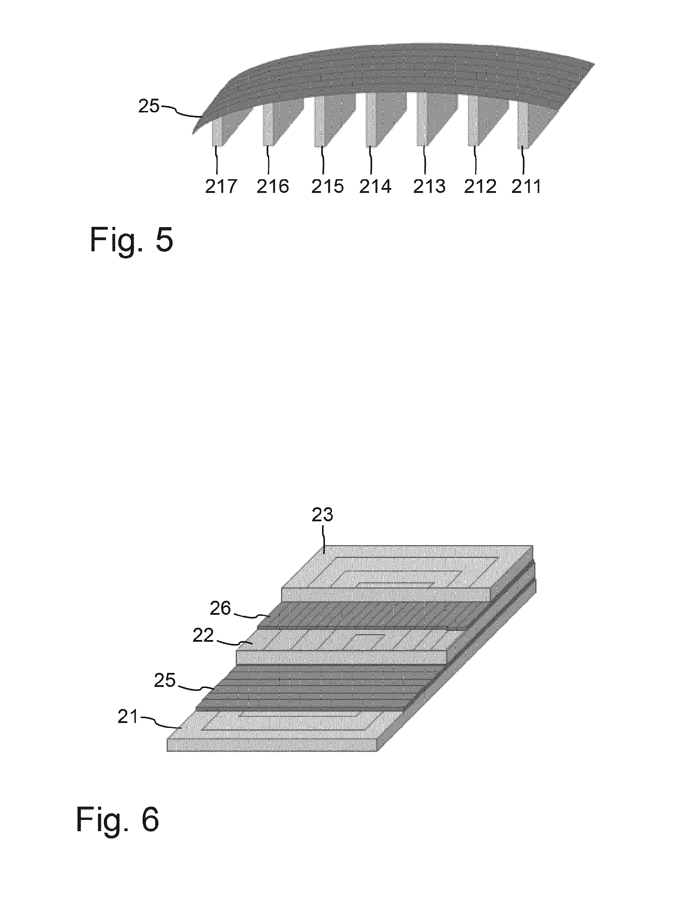

Figur 5 zeigt beispielhaft ein Bauteil, welches mit dem erfindungsgemäß vorgeschlagenen Herstellungsverfahren und der erfindungsgemäßen Vorrichtung herstellbar ist. Das Bauteil 2 gemäß Figur 5 weist eine faserverstärkte Deckschicht 25 auf, welche aufgrund hoher Füllgrade eine hohe Festigkeit aufweist. Zum Lastabtrag können in etwa orthogonal angeordnete innere Stützstrukturen aus unverstärktem Thermoplast vorgesehen sein. Exemplarisch sind in Figur 5 sieben Stützstrukturen 211, 212, 213, 214, 215, 216 und 217 dargestellt. Die Anzahl kann in anderen Ausführungsformen größer oder geringer sein. Die dargestellte Ausführungsform erläutert lediglich exemplarisch das Konstruktionsprinzip des Bauteils. Die Stützstrukturen können als bionische Strukturen berechnet werden, um an den Stellen maximaler Last eine maximale Festigkeit zu ermöglichen.

Mit der beispielhaft in Figur 5 dargestellten Bauteilstruktur können beispielsweise hochfeste und dennoch leichtgewichtige Strukturen erzeugt werden.

Figur 6 zeigt ein zweites Ausführungsbeispiel eines Bauteils gemäß der vorliegenden Erfindung. Das Bauteil gemäß dem zweiten Ausführungsbeispiel enthält fünf Schichten, wobei zwei Schichten 25 und 26 eine Faserverstärkung enthalten, welche in drei Schichten 21, 22 und 23 aus thermoplastischem Material eingebettet sind. Durch das Aufschmelzen der jeweils vorhergehenden Schicht beim Abscheiden der nächsten Schicht wird eine gute Einbettung der Faserverstärkung und eine gute Verbindung der aufeinander abgeschiedenen Schichten erzielt, sodass sich ein Bauteil mit verbesserter Kerbschlagzähigkeit durch homogenisierten Werkstoffübergang und hoher Festigkeit durch lastfallspezifische Integration von endlosen Verstärkungsfasern ergibt.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Aus-führungsform der Erfindung vorhanden ist. Dies schließt die Anwesenheit weiterer Merkmale nicht aus. Sofern die Ansprüche und die vorstehende Beschreibung "erste" und "zweite" Aus-führungsformen definieren, so dient diese Bezeichnung der Unterscheidung zweier gleichartiger Ausführungsformen, ohne eine Rangfolge festzulegen.

## Patentansprüche

1. Vorrichtung (1) zur additiven Fertigung eines Bauteils (2), mit zumindest einer Bauteilaufnahme (3), welche dazu eingerichtet ist, das zu fertigende Bauteil (2) aufzunehmen, und mit zumindest einer Auftragvorrichtung (4), welche dazu eingerichtet ist, ein thermoplastisches Material (29) zu erwärmen und in einer vorgebbaren Menge abzulegen,
**dadurch gekennzeichnet, dass**
die Vorrichtung (1) weiterhin zumindest eine Strahlungsquelle (6) enthält, welche dazu eingerichtet ist, elektromagnetische Strahlung zu erzeugen, mit welcher zumindest eine Teilfläche (66) des Bauteils erwärmbar ist.

2. Vorrichtung (1) zur additiven Fertigung eines Bauteils (2), mit zumindest einer Bauteilaufnahme (3), welche dazu eingerichtet ist, das zu fertigende Bauteil (2) aufzunehmen, und mit zumindest einer Auftragvorrichtung (4), welche dazu eingerichtet ist, ein thermoplastisches Material (29) zu erwärmen und in einer vorgebbaren Menge abzulegen,
**dadurch gekennzeichnet, dass**
die Vorrichtung (1) weiterhin zumindest eine Zufuhreinrichtung (5) enthält, welche dazu eingerichtet ist, eine Faserverstärkung (25) in das Bauteil (2) einzubringen, welche eine trockene Endlosfaser enthält oder daraus besteht.

3. Vorrichtung nach Anspruch 1, **dadurch gekennzeichnet, dass** die Vorrichtung (1) weiterhin zumindest eine Zufuhreinrichtung (5) enthält, welche dazu eingerichtet ist, eine Faserverstärkung (25) in das Bauteil (2) einzubringen, welche eine trockene Endlosfaser enthält oder daraus besteht.

4. Vorrichtung nach einem der Ansprüche 1 bis 3, **dadurch gekennzeichnet, dass** die Strahlungsquelle (6) zumindest einen Laser enthält oder daraus besteht und/oder dass die Strahlungsquelle (6) weiterhin zumindest einen bewegbaren Spiegel (61, 62) enthält, mit welchem die Strahlung (65) auf die zu erwärmende Teilfläche (66) des Bauteils (2) lenkbar ist.

5. Verfahren zur additiven Fertigung eines Bauteils (2), bei welchem ein erwärmtes Thermoplast (29) in vorgebbaren Flächenbereichen des Bauteils (2) abgelegt und durch Abkühlen verfestigt wird, **dadurch gekennzeichnet, dass**
zumindest die vorgebbaren Flächenbereiche (66) des Bauteils (2) vor dem Ablegen des Thermoplastes (29) über die Schmelztemperatur erwärmt werden.

6. Verfahren zur additiven Fertigung eines Bauteils (2), bei welchem ein erwärmtes Thermoplast (29) in vorgebbaren Flächenbereichen des Bauteils (2) abgelegt und durch Abkühlen verfestigt wird, **dadurch gekennzeichnet, dass**
vor dem Abkühlen zusätzlich eine Faserverstärkung (25) in das Bauteil (2) eingebracht wird, welche eine trockene Endlosfaser enthält oder daraus besteht.

7. Verfahren nach Anspruch 5, **dadurch gekennzeichnet, dass** vor dem Abkühlen zusätzlich eine Faserverstärkung (25) in das Bauteil (2) eingebracht wird.

8. Verfahren nach einem der Ansprüche 5 oder 7, **dadurch gekennzeichnet, dass** die Erwärmung etwa 15 K bis etwa 70 K über die Schmelztemperatur erfolgt oder
dass die Erwärmung etwa 20 K bis etwa 40 K über die Schmelztemperatur erfolgt.

9. Verfahren nach einem der Ansprüche 5 oder 7 oder 8, **dadurch gekennzeichnet, dass** die Erwärmung über die Schmelztemperatur ausgehend von der Oberfläche bis in eine Tiefe von etwa 0,01 mm bis etwa 0,2 mm erfolgt, oder dass die Erwärmung über die Schmelztemperatur ausgehend von der Oberfläche bis in eine Tiefe von etwa 0,05 mm bis etwa 0,15 mm erfolgt.

10. Verfahren nach einem der Ansprüche 6 bis 9, **dadurch gekennzeichnet, dass** die Fasererstärkung (25) ein vorimprägniertes textiles Halbzeug (50) enthält, welches einen Faservolumenanteil von mehr als etwa 35% oder mehr als etwa 40% oder mehr als etwa 60% enthält.

11. Verfahren nach einem der Ansprüche 6 bis 10, **dadurch gekennzeichnet, dass** die Fasererstärkung (25) Glasfasern und/oder Kohlefasern und/oder Aramidfasern enthält oder daraus besteht und/oder
dass das Halbzeug (50) mit einem thermoplasischen Polymer imprägniert ist.

12. Verfahren nach einem der Ansprüche 6 bis 11, **dadurch gekennzeichnet, dass** die Faserverstärkung (25) vor dem Ablegen auf dem Bauteil (2) erwärmt wird, ehe diese in erwärmtes Thermoplast (29) eingebettet wird.

13. Verfahren zur additiven Fertigung eines Bauteils (2), bei welchem ein erwärmtes Thermoplast (29) in vorgebbaren Flächenbereichen des Bauteils (2) abgelegt und durch Abkühlen verfestigt wird, **dadurch gekennzeichnet, dass**
zumindest eine Oberfläche des Bauteils (2) durch Einwirkung elektromagnetischer Strahlung (65) über die Schmelztemperatur erwärmt wird.

14. Verfahren nach Anspruch 13, **dadurch gekennzeichnet, dass** das Material des Bauteils an der Oberfläche etwa 15 K bis etwa 30 K über die Schmelztemperatur erwärmt wird und/oder
dass die Erwärmung über die Schmelztemperatur ausgehend von der Oberfläche bis in eine Tiefe erfolgt, welche in etwa der maximalen Rautiefe entspricht.

15. Verfahren nach Anspruch 13 oder 14, **dadurch gekennzeichnet, dass** die Rauhtiefe nach der Erwärmung über die Schmelztemperatur zwischen etwa 0,4 µm und etwa 3 µm beträgt.
